# EUROPÄISCHE PATENTSCHRIFT

(11) **EP 3 047 216 B1**
(45) Veröffentlichungstag und Bekanntmachung des Hinweises auf die Patenterteilung: **01.08.2018**
(21) Anmeldenummer: 14771259.0
(22) Anmeldetag: 16.09.2014
(51) Int. Cl.: F24S 10/50, F24S 60/30, F24S 90/10

(54) **THERMOSIPHONKOLLEKTOR SOWIE VERFAHREN ZU DESSEN HERSTELLUNG**
THERMOSIPHON COLLECTOR AND METHOD FOR THE PRODUCTION THEREOF
COLLECTEUR À THERMOSIPHON ET PROCÉDÉ DE FABRICATION DUDIT COLLECTEUR

(30) Priorität: 20.09.2013 DE 102013218966
(43) Veröffentlichungstag der Anmeldung: 27.07.2016
(73) Patentinhaber: Fraunhofer Gesellschaft zur Förderung der angewandten Forschung E.V., 80686 München (DE); Aventa AS, 0962 Oslo (NO)
(72) Erfinder: KOEHL, Michael, 79379 Müllheim (DE); REKSTAD, John, N-1472 Fjellhamar (NO); MEIR, Michaela, N-1472 Fjellhamar (NO); PIEKARCZYK, Andreas, 79100 Freiburg (DE)
(74) Vertreter: Pfenning, Meinig & Partner mbB
(86) Internationale Anmeldenummer: PCT/EP2014/069705
(87) Internationale Veröffentlichungsnummer: WO 2015/040021

(56) Entgegenhaltungen:
- WO-A1-03/085329
- WO-A2-2009/077965
- JP-U- S5 871 648
- JP-Y2- S5 412 181
- US-A- 4 480 635
- US-A- 4 599 994
- US-A1- 2007 137 639

## Beschreibung

Solarkollektoren sind Vorrichtungen, die aus verschiedenen Komponenten bestehen. Die Kollektoren umfassen dabei prinzipiell einen Absorber bzw. einen Sonnenkollektor, der die Strahlungsenergie der Sonne in Wärmeenergie überführt, die in einen Wärmeträger einfließt. Die Wärme wird mit dem Wärmeträger vom Solarkollektor in einen Akkumulatortank transportiert, ggfs. direkt an den Ort, an dem die Wärme benötigt wird.

Der Wärmeträger kann beispielsweise reines Wasser, eine frostschutzsichere Flüssigkeit (z.B. Wasser mit Glykol), ein geeignetes Öl oder Luft sein. Die Zirkulation des Wärmeträgers durch den Absorber kann entweder über eine Pumpe betrieben werden, oder durch Selbst-Zirkulation erfolgen (Thermosiphonprinzip). Der Effekt der Selbstzirkulation wird durch Platzieren des Solarkollektors unterhalb eines Wärmereservoirs, das den Wärmeträger beinhaltet, erzielt. Wenn die Sonnenstrahlung vom Absorber absorbiert wird, wird der Wärmeträger als Konsequenz erhitzt und die Dichte des Wärmeträgers sinkt.

Die Variation der Dichte, die durch die Temperatur des Wärmeträgers bedingt ist, stellt die Antriebskraft für die Zirkulation dar, wenn der kalte Wärmeträger bodenseitig aus dem Wärmereservoir entnommen wird und bodenseitig in den Absorber aufgegeben wird. Die Zirkulation wird aufrechterhalten, da das erhitzte Medium im Absorber des Sonnenkollektors aufwärts fließt und durch ein kälteres Medium aus dem Wärmereservoir ersetzt wird.

Ausgehend von bekannten Thermosiphonkollektoren ist es Aufgabe der vorliegenden Erfindung, einen Thermosiphonkollektor anzugeben, der einfach zu verwirklichen ist, geringe Kosten bei der Herstellung, beim Transport und der Installation aufweist und somit die Attraktivität von thermischen Solarsystemen, verglichen mit konventionellen Energie-Quellen wie Kohle, Öl und Gas, erhöht. Ebenso ist es Aufgabe der vorliegenden Erfindung, ein entsprechendes Verfahren zur Herstellung eines erfindungsgemäßen Thermosiphonkollektors anzugeben.

Diese Aufgabe wird hinsichtlich eines erfindungsgemäßen Thermosiphonkollektors mit den Merkmalen des Patentanspruchs 1, bezüglich eines Verfahrens zur Herstellung eines erfindungsgemäßen Thermosiphonkollektors mit den Merkmalen des Patentanspruchs 11 gelöst. Die jeweilig abhängigen Patentansprüche stellen dabei vorteilhafte Weiterbildungen dar.

Die vorliegende Erfindung betrifft somit einen Thermosiphonkollektor umfassend zumindest ein Flüssigkeitsreservoir für einen flüssigen Wärmeträger sowie zumindest einen Solarabsorber, wobei zumindest der Solarabsorber aus einer doppelwandigen extrudierten Platte mit mindestens zwei Kanälen gebildet ist, wobei mindestens ein erster Kanal mit einem unteren Bereich des Flüssigkeitsreservoirs in fluidischer Verbindung und mindestens ein zweiter Kanal mit einem oberen Bereich des Flüssigkeitsreservoirs in fluidischer Verbindung steht und jeweils mindestens ein erster Kanal mit mindestens einem zweiten Kanal am vom Flüssigkeitsreservoir abgewandten Ende des Solarabsorbers in fluidischer Verbindung steht. Gemäß der vorliegenden Erfindung ist zumindest der Solarabsorber des Thermosiphonkollektors aus einer doppelwandigen extrudierten Platte gebildet. Die doppelwandige extrudierte Platte beinhaltet dabei zwei verschiedene Sorten von Kanälen, nämlich einerseits mindestens einen ersten Kanal, durch den der Wärmeträger aus dem Flüssigkeitsreservoir nach unten in den Solarabsorber strömen kann, andererseits mindestens einen zweiten Kanal, durch den der Wärmeträger nach seiner Erwärmung nach oben in das Wärmereservoir strömt. Der Solarabsorber ist somit über die beiden Sorten von Kanälen mit dem Flüssigkeitsreservoir verbunden. Die erste Sorte von Kanälen mündet dabei in einen unteren Bereich des Flüssigkeitsreservoirs, d.h. bevorzugt an der Stelle, an der der flüssige Wärmeträger im Flüssigkeitsreservoir die größte Dichte aufweist (und somit kalt ist), die zweite Sorte von Kanälen endet dabei in einem oberen Bereich des Wärmereservoirs, d.h. an der Stelle, an der der flüssige Wärmeträger eine möglichst geringe Dichte aufweist (und somit heiß ist).

Durch das Flüssigkeitsreservoir und die in der doppelwandigen extrudierten Platte verlaufenden Kanäle wird somit ein abgeschlossenes Volumen gebildet.

Durch die erfindungsgemäße Kombination einer doppelwandigen extrudierten Platte, die mindestens zwei Sorten von unterschiedlichen Kanälen für den flüssigen Wärmeträger aufweist, wobei die erste Sorte von Kanälen im unteren Bereich und die zweite Sorte von Kanälen im oberen Bereich des Flüssigkeitsreservoirs mündet, wird ermöglicht, dass ein selbsttätiger Fluss des flüssigen Wärmeträgers im Kollektor stattfindet und somit das Thermosiphon-Prinzip verwirklicht wird. Durch die Anordnung der einzelnen Kanäle des Solarabsorbers im Flüssigkeitsreservoir wird die Erzeugung von Schichten mit unterschiedlichen Temperaturen (Stratifikation) im Flüssigkeitsreservoir ermöglicht. Wenn der Thermosiphonkollektor solarer Strahlung ausgesetzt wird, fließt somit kalter flüssiger Wärmeträger aus dem Wärmereservoir durch die erste Sorte von Kanälen (abströmender Kanal) durch den Solarabsorber. Am Ende des Solarabsorbers, d.h. an der vom Flüssigkeitsreservoir abgewandten Ende des Solarabsorbers bewirkt die fluidische Verbindung zwischen den Kanälen eine Verteilung des flüssigen Wärmeträgers und ein aufwärts gerichtetes Strömen durch den zweiten Kanal bzw. die zweiten Kanäle.

Erfindungsgemäß sind sämtliche Kanäle im Solarabsorber in einer Ebene nebeneinanderliegend angeordnet. Vorteilhaft hierbei ist, dass sämtliche Kanäle des Solarabsorbers der Solarstrahlung ausgesetzt sind und beide Sorten von Kanälen die gleiche thermische Isolierung gegenüber der Umgebungsluft aufweisen. Diese Ausführungsform sichert,
dass die Zirkulation stoppt, sobald die Intensität der Solarstrahlung unter ein kritisches Niveau fällt, z.B. abends oder im Falle von Bewölkung oder Abschattung des Solarkollektors. Nach kurzer Zeit erreicht der Wärmeträger in den aufwärts gerichteten Strömungskanälen eine Temperatur, die gleich der Temperatur in den abwärts gerichteten Strömungskanälen ist. Somit entfällt die Triebkraft für die Selbstzirkulation.

Erfindungsgemäß ist hierbei die erste Sorte von Kanälen außen am Solarabsorber angeordnet und die zweite Sorte von Kanälen innen angeordnet, so dass die zweite Sorte von Kanälen von den ersten Kanälen eingeschlossen ist. Auf diese Art und Weise kann effizient und einfach eine inverse Zirkulation vermieden werden, wodurch Wärme aus dem Flüssigkeits- bzw. Wärmereservoir über die Oberfläche des Solarabsorbers freigesetzt werden würde. Das Problem der inversen Zirkulation kann auch auf andere Art und Weise, z.B. durch Einführung eines Ein-Weg-Ventils vermieden werden, jedoch kann gemäß der zuvor genannten Ausführungsform der vorliegenden Erfindung dieses Problem auf einfacherer und direkte Art und Weise gelöst werden.

Die Effizienz des Kollektors wird im Wesentlichen durch die Temperatur der Absorberoberfläche, den Wärmeverlust durch eine eventuelle transparente Abdeckung sowie die Effektivität des Wärmetransportes und der Übertragung der Wärmeenergie in das Flüssigkeitsreservoir durch den Wärmeträger festgelegt. Diese Faktoren sind gegenseitig voneinander abhängig. Die essentiellen Merkmale für die Effizienz eines Thermosiphonsystems sind
i) wie gut die auf der Oberfläche des Solarabsorbers anfallende Energie in den flüssigen Wärmeträger übertragen wird und
ii) wie gut der Wärmeträger in der Lage ist, die Wärme aus dem Absorber in das Flüssigkeitsreservoir zu überführen.

Das Design der doppelwandigen extrudierten Platte, die erfindungsgemäß als Absorber verwendet wird, ermöglicht eine große Kontaktoberfläche zwischen der die Solarstrahlung absorbierenden Oberfläche des Absorbers und somit eine große Fläche, die in direktem Kontakt mit dem Wärmeträger steht. In einer bevorzugten Ausführungsform sind mehr als 95% der Solar-Strahlung absorbierten Oberfläche in direktem Kontakt mit dem Wärmeträger und von diesem lediglich durch eine dünne Polymer-Wandung getrennt. Eine bevorzugte Wandungsstärke der doppelwandigen extrudierten Platte beträgt dabei von 0,5 bis 2 mm, bevorzugt von 0,8 bis 1 mm. Trotz der Tatsache der geringen Wärmeleitfähigkeit des polymeren Materials, die typischerweise in einem Bereich von 0,2 W/(mK) liegt, stellt die dünne Wandung eine vernachlässigbare Barriere für den Wärmetransfer in den Wärmeträger dar.

Ein großer Querschnitt, der durch die zusätzliche Fläche einer Vielzahl von Kanälen im Solarabsorber bedingt ist, bewirkt einen vernachlässigbaren Widerstand für den Fluss des Wärmeträgers. Die Herausforderung ist
i) einen homogenen Fluss in allen zweiten Kanälen (Kanälen mit nach oben gerichteter Strömung) und
ii) eine genügend hohe Flussgeschwindigkeit zur Abführung der im Absorber erzeugten Hitze
zu ermöglichen.

Die Homogenität wird automatisch erreicht, weil eine geringe Flussgeschwindigkeit in einem Kanal zu höheren Temperaturen in diesem Kanal, verglichen mit benachbarten Kanälen mit höherer Flussgeschwindigkeit führt. Aufgrund der geringen Wärmeleitfähigkeit des Materials besteht wenig Transfer der zusätzlichen Wärme in dem spezifischen Kanal in benachbarte Kanäle. Konsequenterweise nimmt die Dichte des Wärmeträgers in den wärmsten Kanälen mehr als in den benachbarten Kanälen ab, was wiederum die Flussgeschwindigkeit in dem warmen Kanal, verglichen mit benachbarten Kanälen erhöht. Diese Selbstregulation ist wichtig für die Homogenität des Wärmetransfers.

Die Gesamtflussgeschwindigkeit durch den Kollektor wird durch die Anzahl der ersten Kanäle (Kanäle mit abwärts gerichteter Strömungsrichtung) bezogen auf die Anzahl der aufwärts gerichteten Strömungskanäle (zweite Kanäle) bestimmt. In einer bevorzugten Ausführungsform ist die Anzahl der ersten Kanäle des Solarabsorbers kleiner der Anzahl der zweiten Kanäle des Solarabsorbers. Gemäß dieser Ausführungsform ist die Flussgeschwindigkeit in abwärts gerichteten Strömungskanälen höher als in den aufwärts gerichteten Strömungskanälen, da das Gesamtvolumen des fließenden Wärmeträgers in beiden Richtungen gleich ist. Zu wenige abwärts gerichtete Strömungskanäle bewirken einen Flusswiderstand, der den Gesamtvolumenfluss herabsetzt, zu viele abwärts gerichtete Strömungskanäle resultieren in einer Aufheizung des abwärts fließenden Wärmeträgers, der dann wiederum die Dichteunterschiede zwischen dem abwärts fließenden und aufwärts fließenden Wärmeträger aufhebt.

Die optimale Anzahl an ersten und zweiten Kanälen, die zu einer optimalen Kollektorperformance führen, variieren je nach Größe des Absorbers, Anwendungstyp und klimatischen Bedingungen. Bevorzugte Ausführungsformen haben z.B. insgesamt zwischen 2 und 20 Kanälen.

Um das Gewicht und konsequenterweise die Kosten des Thermosiphon-Systems zu reduzieren, ist der Thermosiphonkollektor gemäß der vorliegenden Erfindung vorzugsweise für geringen hydraulischen Druck ausgelegt, d.h. bevorzugt auf den Gravitationsdruck, der durch die Höhe der Säule des Wärmeträgers innerhalb des Solarabsorbers und des Flüssigkeitsreservoirs resultiert. Der niedrige Druck ist wichtig, da die polymeren Materialien, aus denen die doppelwandige extrudierte Platte gebildet ist, unter dem Einfluss von hohem Druck und hohen Temperaturen leicht verformbar sind.

Gemäß einer weiteren bevorzugten Ausführungsform ist auf der der Sonnenstrahlung abgewandten Seite des Solarkollektors zumindest bereichsweise oder vollflächig eine thermische Isolierung aufgebracht, wobei die Isolierung bevorzugt als weitere doppelwandige extrudierte Platte ausgebildet ist.

Das Flüssigkeitsreservoir kann zudem entweder auf der der Sonnenstrahlung zugewandten Seite als auch auf der Sonnenstrahlung abgewandten Seite des Solarabsorbers angeordnet sein. Falls die Wärme am Ende eines Tages aus dem Flüssigkeitsreservoir entnommen wird, kann die Wandung des Flüssigkeitsreservoirs als zusätzliche Absorberoberfläche genutzt werden. Falls die Wärme gespeichert werden soll, kann auch das Flüssigkeitsreservoir eine thermische Isolierung aufweisen. Gemäß einer weiteren vorteilhaften Ausführungsform ist es ebenso möglich, dass auf der der Sonnenstrahlung zugewandten Seite des Solarkollektors zumindest bereichsweise oder vollflächig eine Verglasung aufgebracht ist. Die Verglasung kann auch beweglich ausgebildet sein, so dass eine flexible und angepasste Abdeckung der Vorderseite des Solarabsorbers möglich ist. Die Verglasung besteht dabei entweder aus Glasmaterialien oder transparenten Kunststoffen wie beispielsweise Polycarbonaten.

In einer weiteren vorteilhaften Ausführungsform sind der Solarabsorber und das Flüssigkeitsreservoir einstückig aus einer doppelwandigen extrudierten Platte ausgebildet, wobei die fluidische Kommunikation des mindestens einen ersten bzw. des mindestens einen zweiten Kanals mit dem Flüssigkeitsreservoir durch mindestens eine Öffnung in der inneren Wandung der doppelwandig extrudierten Platte möglich ist. Diese bevorzugte Ausführungsform der vorliegenden Erfindung beruht auf der Tatsache, dass die doppelwandige extrudierte Platte, aus denen der komplette Thermosiphonkollektor gebildet ist, aufgrund ihrer geringen Wandstärke der Platte entweder durch Thermoformen oder kaltes Umformen geformt werden kann. Somit kann die Platte so umgeformt werden, dass ein Teil der Platte als Absorber ausgebildet ist, ein anderer Teil der Platte das Flüssigkeitsreservoir oder zumindest einen Teil des Flüssigkeitsreservoirs bildet. Alternativ kann der Thermosiphonkollektor auch durch Spritzgießen, Rotationsformen, Blasformen oder Thermoverformung von festen Platten hergestellt werden. Ein Verbund zwischen den ungeformten Teilen und dem Teil der Platte, die den Absorber bildet, kann durch Schweißen, Verkleben oder mechanisches Verbinden erfolgen. Selbstverständlich weist der Thermosiphonkollektor Seitenwände auf, die das Flüssigkeitsreservoir abdichtend begrenzen.

Eine weitere Ausführungsform sieht vor, dass der Thermosiphonkollektor gemäß der vorliegenden Offenbarung mindestens drei doppelwandige extrudierte Platten umfasst, wobei eine erste doppelwandige extrudierte Platte den Solarabsorber sowie eine frontseitige Wandung des Flüssigkeitsreservoirs bildet, eine zweite doppelwandige extrudierte Platte die Rückwand des Flüssigkeitsreservoirs bildet, und eine dritte doppelwandige extrudierte Platte den Boden des Flüssigkeitsreservoirs sowie bevorzugt eine rückseitige Isolierung des Solarabsorbers bildet, wobei die erste, zweite und dritte doppelwandige extrudierte Platte miteinander abdichtend verbunden sind. Diese Ausführungsform ähnelt der voranstehend beschriebenen Ausführungsform, insbesondere ist der Absorber dabei komplett aus einer einzigen Platte gebildet. Die Rückwand und der Boden des Flüssigkeitsreservoirs können dabei durch separate doppelwandige Platten gebildet sein. Zusätzlich kann der Boden des Flüssigkeitsreservoirs verlängert ausgebildet sein und sich bis über die Rückseite des Solarabsorbers erstrecken, so dass hierbei gleichzeitig eine thermische Isolierung der Rückseite ausgebildet wird.

Weiter ist es bevorzugt, wenn der Thermosiphonkollektor im oberen Bereich des Flüssigkeitsreservoirs mindestens eine Entnahmemöglichkeit für den flüssigen Wärmeträger und/oder einen Wärmetauscher eingebracht ist und/oder im unteren Bereich des Flüssigkeitsreservoirs eine Zufuhrmöglichkeit für flüssigen Wärmeträger vorhanden ist.

Zusätzlich kann ein Mechanismus zur Regulierung des Flüssigkeitsstandes im Flüssigkeitsreservoir vorhanden sein, der bevorzugt nach dem Überlaufprinzip (wie beispielsweise in Toilettensystemen) realisiert ist. Dadurch wird der obere Flüssigkeitslevel im Wärmereservoir begrenzt, so dass beispielsweise noch ein Freiraum vorhanden sein kann, für den Fall, dass vorhandene Flüssigkeit sich beim Aufwärmen ausdehnt. In diesem Fall ist die Entnahmemöglichkeit für heiße Flüssigkeit selbstverständlich unterhalb des vorgegebenen maximalen Flüssigkeitslevels einzubringen.

Weiter vorteilhaft sind die Seitenwände des Absorbers ebenso aus doppelwandigen extrudierten Platten gebildet, wodurch eine weitere verbesserte Isolierung des Flüssigkeitsreservoirs resultiert.

Insbesondere bei Verwendung von reinem Wasser als Wärmeträger besteht die Gefahr des Überhitzens des Thermosiphon-Systems, da die maximale akzeptable Temperatur 100 °C beträgt. Um eine hohe Effizienz bei niedriger Wassertemperatur aufrechtzuerhalten, die Effizienz bei hohen Wassertemperaturen zu erhöhen und gleichzeitig die Gefahr eines Siedeverzugs zu minimieren, kann die Vorderseite des Absorbers (d.h. die der Sonne zugewandte Seite) teilweise mit einer transparenten und isolierenden Abdeckung versehen sein. Ein partiell abgedeckter Absorber, bei dem die Abdeckung am oberen Teil des Absorbers angebracht ist, führt dem Flüssigkeitsreservoir weiter Temperaturen zu, die oberhalb der Stagnationstemperatur für den nicht-abgedeckten Teil des Absorbers liegen. Nach und nach wird Wärmeträger (z.B. Wasser), die aufwärts gerichteten Strömungskanäle vom Boden des Absorbers befüllen, wobei der Wärmeträger eine höhere Temperatur als diese Stagnationstemperatur aufweist. Die nicht-abgedeckten Teile des Absorbers werden dann die Temperatur des Wärmeträgers auf die Stagnationstemperatur im unteren und nicht-abgedeckten Teil des Absorbers durch Strahlungsverluste abkühlen, der Wärmeträger wird im abgedeckten Teil des Absorbers wieder aufgewärmt. Solange die mittlere Temperatur der nach oben strömenden Wassersäule höher als die nach unten strömende Wassersäule ist, wird die Zirkulation aufrecht erhalten. Auf diese Art und Weise dient der nichtabgedeckte Teil des Absorbers als "kalter Finger" und reduziert den Temperaturanstieg im Flüssigkeitsreservoir. Die Anzahl an abgedeckten und nicht-abgedeckten Flächen des Absorbers hängt von den klimatischen Bedingungen ab. In sehr heißen Gegenden ist eine Abdeckung nicht notwendig.

Der Wärmeträger (z.B. Wasser für den häuslichen Gebrauch) kann entweder direkt aus dem Flüssigkeitsreservoir entnommen werden, ebenso ist es auch möglich, dass das Flüssigkeitsreservoir mit einem Wärmetauscher zum direkten Austausch der Wärme (beispielsweise mit Wasser für den häuslichen Gebrauch) stattfindet. Der Wärmetauscher kann entweder eine direkte Arbeitseinheit darstellen, oder kann auch als kleiner Tank innerhalb des Flüssigkeitsreservoirs ausgebildet sein.

Bevorzugt ist das Thermosiphon-System in Standarddimension hinsichtlich Breite und Höhe ausgebildet. Einzelne Module können ebenso durch einen sie verbindenden Wärmeaustauscher oder ein gemeinsames Flüssigkeitsreservoir zusammengekoppelt werden. Typische Dimensionen eines Moduls legen bei ca. 1 m² Absorberfläche und einem Volumen des Flüssigkeitsreservoirs von ca. 50 bis 70 l.

Die vorliegende Erfindung betrifft ebenso ein Verfahren zur Herstellung eines Thermosiphonkollektors gemäß der vorliegenden Erfindung, bei dem ein Solarabsorber aus einer doppelwandigen extrudierten Platte mit einem Flüssigkeitsreservoir in fluidische Verbindung gebracht wird.

Gemäß einer ersten Variante weist dabei die doppelwandige extrudierte Platte des Solarabsorbers bereits anfänglich mindestens zwei Kanäle auf, wobei die mindestens beiden Kanäle auf der Unterseite des Solarabsorbers in fluidische Kommunikation miteinander gebracht werden. Auf der gegenüberliegenden Seite wird der erste Kanal mit dem unteren Bereich des Flüssigkeitsreservoirs, der mindestens eine zweite Kanal mit der Oberseite des Flüssigkeitsreservoirs in fluidische Kommunikation gebracht.

Alternativ ist es ebenso möglich, dass die doppelwandige extrudierte Platte per se lediglich einen einzigen Kanal aufweist (die Platte kann jedoch ebenso mehrere Kanäle aufweisen), die ersten und zweiten Kanäle gemäß der vorliegenden Erfindung werden dann dadurch erzeugt, dass die doppelwandige extrudierte Platte umgeformt wird und durch das Umformen absteigende bzw. aufsteigende Kanäle für den flüssigen Wärmeträger geschaffen werden. Die ersten (absteigenden) bzw. zweiten (aufsteigenden) Kanäle werden ebenso auf die zuvor beschriebene Weise in fluidische Kommunikation mit dem Flüssigkeitsreservoir in Verbindung gebracht.

Gemäß einer bevorzugten Ausführungsform ist vorgesehen, dass eine doppelwandige extrudierte Platte mit mindestens zwei Kanälen
a) zumindest auf einer Stirnseite verschlossen wird, so dass eine fluidische Kommunikation zwischen den mindestens zwei Kanälen möglich ist,
b) auf einer Längsseite zumindest eine Öffnung pro Kanal in die Wandung der doppelwandigen extrudierten Platte eingebracht wird, wobei die mindestens eine Öffnung für den mindestens einen ersten Kanal, verglichen mit der mindestens einen Öffnung für den mindestens einen zweiten Kanal auf der Längsseite der doppelwandigen extrudierten Platte weiter in Richtung des auf der Stirnseite angebrachten Verschlusses angeordnet ist, wobei sämtliche Öffnungen so angebracht werden, dass ein Überstand resultiert, und
c) der Überstand umgeformt wird, um die der verschlossenen Stirnseite gegenüberliegende Stirnseite mit der Längsseite der doppelwandigen extrudierten Platte, in die die Öffnungen eingebracht sind bzw. werden in Berührung zu bringen und anschließend zu verbinden,
wobei die Schritte a), b) und c) in beliebiger Reihenfolge ausgeführt werden können.

Ebenso ist es möglich, dass
a) in die Wandung einer Längsseite einer doppelwandigen extrudierten Platte pro Kanal mindestens eine Öffnung zur Herstellung einer fluidischen Verbindung mit einem oberen Bereich des Flüssigkeitsreservoirs, mindestens eine Öffnung zur Herstellung einer Flussumkehr für den flüssigen Wärmeträger sowie mindestens eine Öffnung zur Herstellung einer fluidischen Verbindung mit einem unteren Bereich des Flüssigkeitsreservoirs eingebracht wird, und
b) zwischen der mindestens einen Öffnung zur Herstellung einer fluidischen Verbindung mit einem oberen Bereich des Flüssigkeitsreservoirs und der mindestens einen Öffnung zur Herstellung einer fluidischen Verbindung mit einem unteren Bereich des Flüssigkeitsreservoirs ein Flüssigkeitsreservoir ausgebildet wird.

Gemäß einer bevorzugten Ausführungsform der voranstehend beschriebenen Variante ist vorgesehen, dass der Abstand zwischen der mindestens eine Öffnung zur Herstellung einer fluidischen Verbindung mit einem oberen Bereich des Flüssigkeitsreservoirs und der mindestens einen Öffnung zur Herstellung einer Flussumkehr für den flüssigen Wärmeträger größer ist als der Abstand zwischen der mindestens einen Öffnung zur Herstellung einer Flussumkehr für den flüssigen Wärmeträger und der mindestens einen Öffnung zur Herstellung einer fluidischen Verbindung mit einem unteren Bereich des Flüssigkeitsreservoirs.

Zusätzlich kann vorgesehen sein, dass der Boden, die Rückseite des Flüssigkeitsreservoirs, die seitlichen Wände des Flüssigkeitsreservoirs bzw. eine rückseitige Isolierung des Solarabsorbers durch mindestens eine weitere doppelwandige extrudierte Platte gebildet wird, die entsprechend angebracht wird.

Die vorliegende Erfindung wird anhand der beigefügten Figuren näher beschrieben, ohne die Erfindung auf den dargestellten Sachverhalt zu beschränken.

Dabei zeigen:
Figur 1 eine erste Ausführungsform eines erfindungsgemäßen Thermosiphonkollektors.
Figur 2 eine Variante zur Herstellung eines erfindungsgemäßen Thermosiphonkollektors.
Figur 3 verschiedene Varianten erfindungsgemäßer Thermosiphonkollektoren.
Figur 4 einen weiteren Thermosyphonkollektor, der zwei doppelwandige extrudierte Platten umfasst.
Figur 5 eine schematische Darstellung verschiedener Verfahrensschritte zur Herstellung eines Thermosiphonkollektors.
Figur 6 einen weiteren Thermosiphonkollektor aus drei doppelwandig extrudierten Platten.
Figur 7 einen weiteren Thermosiphonkollektor aus drei doppelwandigen extrudierten Platten mit zusätzlicher Abdeckung.
Figur 8 eine Seitenwand eines Thermosiphonkollektors.
Figur 9 verschiedene Möglichkeiten der Abdeckung eines Solarabsorbers eines Thermosiphonkollektors nach der vorliegenden Erfindung.
Figur 10 eine schematische Darstellung eines Thermosiphonkollektors nach der vorliegenden Erfindung mit eingebrachtem Wärmetauscher sowie
Figur 11 eine modulare Verschaltung verschiedener Module eines erfindungsgemäßen Thermosiphonkollektors.

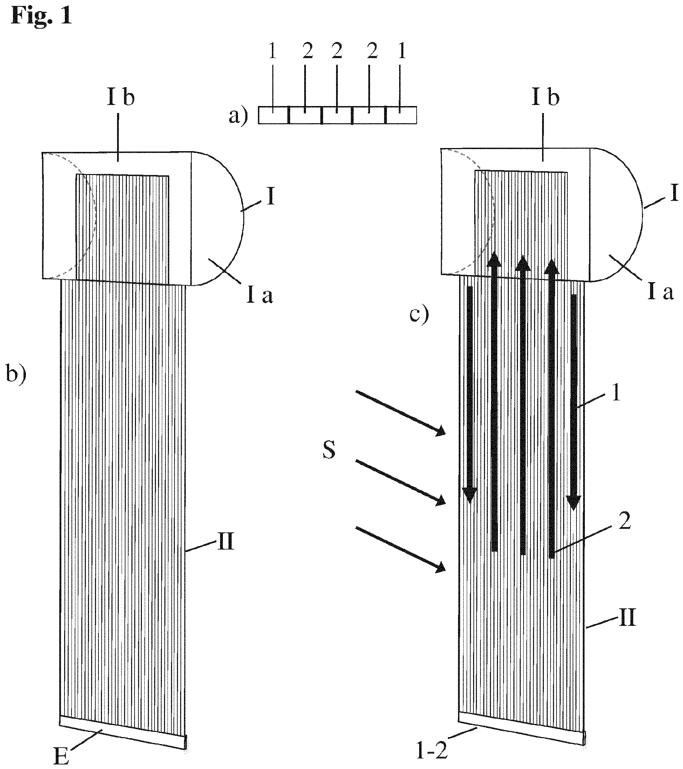

In Figur 1a ist ein Querschnitt durch eine doppelwandige extrudierte Platte dargestellt, aus der erfindungsgemäß der Thermosiphonkollektor, insbesondere der Absorber gebildet sein kann. Erkennbar sind die unterschiedlichen Kanäle, die in Bezug auf Figuren 1b und 1c den ersten Kanälen 1 bzw. zweiten Kanälen 2 entsprechen. In Figur 1b ist ein erster erfindungsgemäßer Thermosiphonkollektor dargestellt. Der Thermosiphonkollektor umfasst dabei ein Flüssigkeitsreservoir l, das gemäß den allgemeinen Prinzipien eines Thermosiphonkollektors oben am Kollektor angebracht ist. Im Flüssigkeitsreservoir l findet im Betrieb des Thermosiphonkollektors eine Stratifikation des enthaltenden flüssigen Wärmeträgers statt, wobei sich im Flüssigkeitsreservoir l ein Temperaturgradient der enthaltenen Flüssigkeit einstellt. Im unteren Bereich Ia sammelt sich dabei aufgrund der höheren Dichte des Wärmeträgers kälterer Wärmeträger an, während im oberen Bereich Ib wärmerer Wärmeträger mit geringerer Dichte anzutreffen ist. Erfindungsgemäß ist nunmehr ein Solarabsorber II mit dem Flüssigkeitsreservoir I verbunden, wobei der Solarabsorber aus der in Figur 1a dargestellten doppelwandig extrudierten Platte gebildet ist. Der Solarabsorber umfasst dabei zwei außenliegende Kanäle 1, die in die fluidisch mit dem unteren Bereich la des Flüssigkeitsreservoirs I verbunden sind. Die zweiten Kanäle 2 sind dabei länger ausgebildet und führen direkt in den Bereich lb des Flüssigkeitsreservoirs I. Der Solarabsorber ist auf der unteren Seite E verschlossen, hierbei muss sichergestellt sein, dass die einzelnen Kanäle 1 bzw. 2 in fluidischer Kommunikation miteinander stehen können. In Figur 1c sind die Fließrichtungen des Wärmeträgers im Thermosiphonkollektor dargestellt. In den ersten Kanälen 1, die in dem in Figur 1 dargestellten Thermosiphonkollektor im Solarabsorber II außen angeordnet sind, fließt der Wärmeträger dabei aus dem kälteren Bereich la des Flüssigkeitsreservoirs I nach unten in den Absorber II. Im Umkehrbereich 1-2 des Solarabsorbers II findet eine Flussumkehr des Wärmeträgers statt, der somit von den ersten Kanälen 1 in die zweiten Kanäle eintritt. Die dargestellte Frontseite des Thermosiphonkollektors stellt dabei die dem Sonnenlicht zugewandte Seite S dar. In dem in Figur 1 dargestellten Thermosiphonkollektor sind somit sämtliche Kanäle im Solarabsorber nebeneinanderliegend angeordnet, wobei die Kanäle 1 kürzer ausgebildet sind als die Kanäle 2, die Kanäle 2 enden dabei im wärmeren Bereich Ib des Flüssigkeitsreservoirs I.

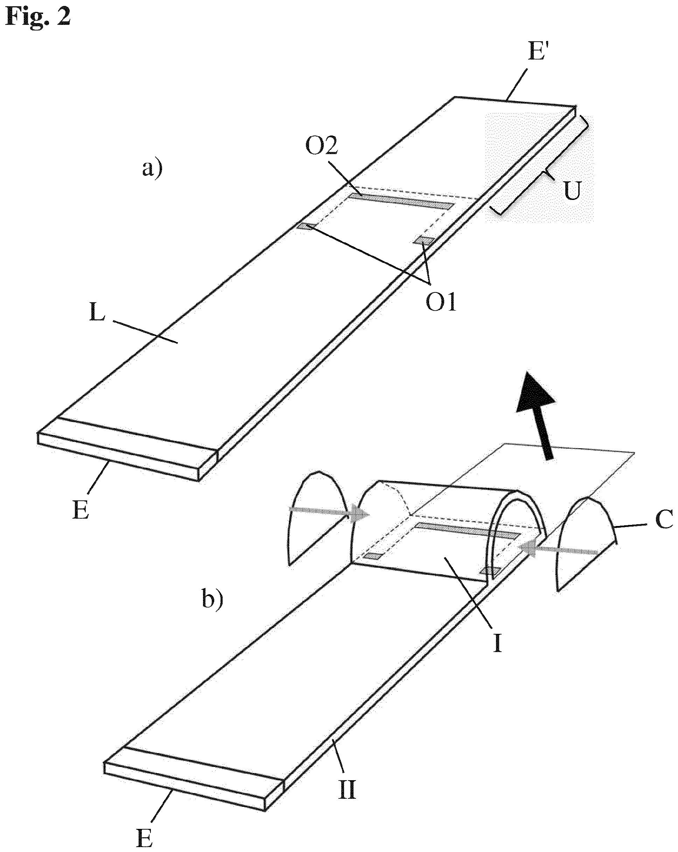

In Figur 2 ist ein Verfahren zur Herstellung eines erfindungsgemäßen Thermosiphonkollektors dargestellt, der dabei aus einer einzigen doppelwandigen extrudierten Platte gebildet wird. Wie in Figur 2a dargestellt, geht man dabei von einer doppelwandigen extrudierten Platte aus, die zunächst am unteren Ende E verschlossen wird. Dabei ist sicherzustellen, dass die einzelnen Kanäle 1 und 2 innerhalb der doppelwandigen extrudierten Platte (nicht dargestellt) am unteren Ende, d.h. im Bereich des Verschlusses E, miteinander fluidisch kommunizieren können (analog zur Flussumkehr 1-2 aus Figur 1c). Dies kann beispielsweise dadurch bewerkstelligt werden, dass die Trennwände innerhalb der doppelwandigen extrudierten Platte in diesem Bereich herausgetrennt werden. In einem ersten Schritt wird auf einer Längsseite L der doppelwandigen extrudierten Platte Öffnungen O1 und O2 für die einzelnen Kanäle eingebracht. Dabei wird die Wandung auf der Längsseite L durchtrennt, beispielsweise werden entsprechende Öffnungen eingefräst. Die Öffnungen O1 und O2 sind dabei allerdings nicht am Ende der Platte angebracht, es verbleibt ein Überstand U in der Platte. In einem weiteren Schritt, dargestellt in Figur 2b, wird der Überstand U umgeformt, so dass das zweite Ende E' der doppelwandig extrudierten Platte auf der Längsseite L zum Liegen kommt. Das Ende E' wird sodann mit der Längsseite verbunden, z.B. durch eine Klebe- oder Schweißverbindung. Dabei ist zu beachten, dass die Länge des Stückes U so gewählt wird, dass vom Auflagepunkt des Endes E' auf der Längsseite L sämtliche Öffnungen O1 und O2 eingeschlossen sind. In einem abschließenden Schritt werden seitliche Verschlüsse C, die beispielsweise ebenso aus doppelwandig extrudierten Platten gebildet sein können, auf die verbleibenden Öffnungen aufgebracht und mit diesen verbunden. Sämtliche Verbindungen, beispielsweise des Endes E' mit der Längsseite L bzw. auch die Verbindung der Endkappen C mit der doppelwandigen Platte des Thermosiphonkollektors können dabei durch Kleben aber auch Schweißverbindungen realisiert sein. Der erfindungsgemäße Thermosiphonkollektor ist im Wesentlichen einstückig aus einer einzigen doppelwandigen extrudierten Platte gebildet und somit auf sehr effiziente Art und Weise herstellbar. In einem einzigen Arbeitsschritt können sowohl Flüssigkeitsreservoir I und Absorber II gebildet werden. Zusätzlich können selbstverständlich in das Flüssigkeitsreservoir I noch die üblichen Zulauf- oder Ablaufmöglichkeiten für Wärmefluid oder auch Wärmetauschermittel eingebracht werden (nicht dargestellt).

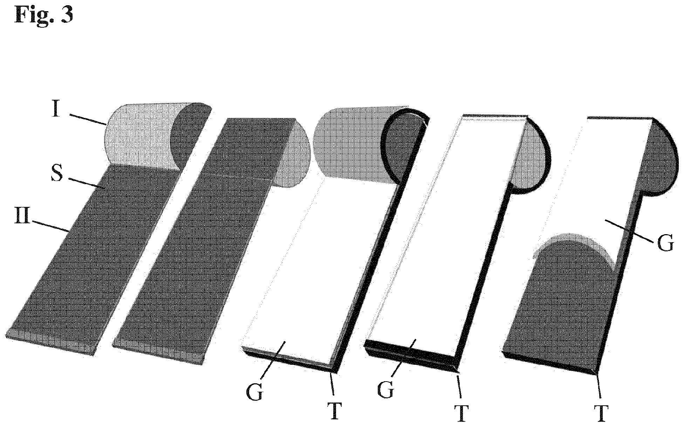

In Figur 3 sind verschiedene Konfigurationen des in Figur 2 vorgestellten Thermosiphonkollektors gemäß der vorliegenden Erfindung dargestellt. Figur 3 links zeigt einen Thermosiphonkollektor wie in Figur 2 dargestellt, bei dem das Flüssigkeitsreservoir I auf der der Sonne zugewandten Seite S des Thermosiphonkollektors angebracht ist, während in der zweiten Abbildung in Figur 3 das Flüssigkeitsreservoir auf der Rückseite des Kollektors angeordnet ist. Die plan ausgebildete Rückseite des Flüssigkeitsreservoirs kann dabei ebenso zur Absorption von Sonnenstrahlung verwendet werden. Die dritte Abbildung der Figur 3 zeigt einen Thermosiphonkollektor wie in Figur 3 links dargestellt, allerdings ist auf der der Sonnenstrahlung zugewandten Seite S noch eine vollständige Verglasung G und auf der Rückseite eine thermische Isolierung T angebracht. Die vierte Darstellung gemäß Figur 3 zeigt ein ähnliches Prinzip wie die zweite Abbildung gemäß Figur 3, allerdings ebenso mit frontseitiger Verglasung G und rückseitiger Isolierung T. In Figur 3 rechts dargestellt ist eine entsprechende Ausgestaltung eines Thermosiphonkollektors mit partieller Verglasung G.

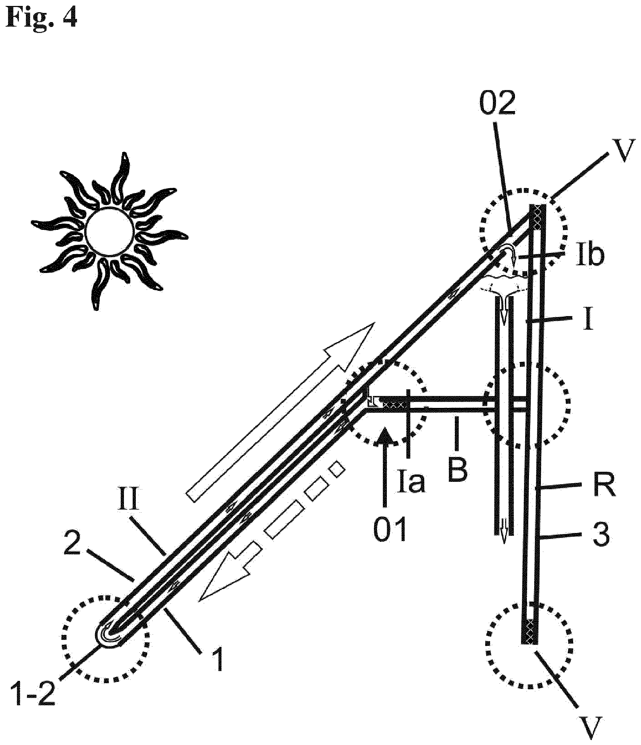

Figur 4 zeigt einen Thermosiphonkollektor, der gemäß Figur 4 aus zwei doppelwandig extrudierten Platten gebildet ist. Der Solarabsorber II ist dabei wiederum aus einer doppelwandig extrudierten Platte (erste Platte) gebildet. Der Thermosiphonkollektor gemäß Figur 4 weist ebenso ein Flüssigkeitsreservoir I sowie einen Solarabsorber II auf, wobei die abwärts gerichteten Strömungskanäle 1 und die aufwärts gerichteten Strömungskanäle 2 in Einfallrichtung des Sonnenlichtes S hintereinander angeordnet sind. Der Solarabsorber II kann dabei durch Umformung einer doppelwandigen extrudierten Platte verwirklicht werden, wobei beispielsweise an der Stelle 1-2 eine Umformung der Platte um 180° erfolgt. Zudem werden Öffnungen O1 und O2 in die Platte eingebracht, wobei über die Öffnung O1 kalter flüssiger Wärmeträger in den ersten Kanal 1 einströmen kann und über die Öffnung O2 erwärmter flüssiger Wärmeträger in das Flüssigkeitsreservoir I aus dem Kanal 2 einströmen kann. Der Boden B des Flüssigkeitsreservoirs 1 ist dabei ebenso noch einstückig aus der ersten extrudierten Platte gebildet. Zusätzlich weist das Flüssigkeitsreservoir eine Rückwand R auf, die aus einer zweiten doppelwandigen extrudierten Platte 3 gebildet ist. Diese Platte 3 weist bevorzugt am oberen und unteren Ende Verschlüsse V auf. Ein entsprechender Verschluss kann auch im bodenseitigen Bereich B der ersten doppelwandigen extrudierten Platte neben der Öffnung O1 ausgebildet sein, so dass zwar eine Durchströmung der ersten doppelwandigen Platte durch die Kanäle 1 und 2 möglich ist, der Bodenbereich B jedoch gegenüber dem Flüssigkeitsreservoir I abdichtend verschlossen ist und nicht mit einem Fluid gefüllt ist. Somit stellt der Bodenbereich B wie auch die Rückseite R eine effiziente Isolierung dar. Der Bodenbereich B und die rückseitige Platte R werden dabei an ihrem Berührungspunkt miteinander verbunden. Die offenen Seiten des in Figur 4 dargestellten Thermosiphonkollektors können ebenso durch Seitenwände verschlossen werden (nicht dargestellt). Diese Seitendwände können bevorzugt ebenso aus doppelwandigen extrudierten Platten gebildet sein.

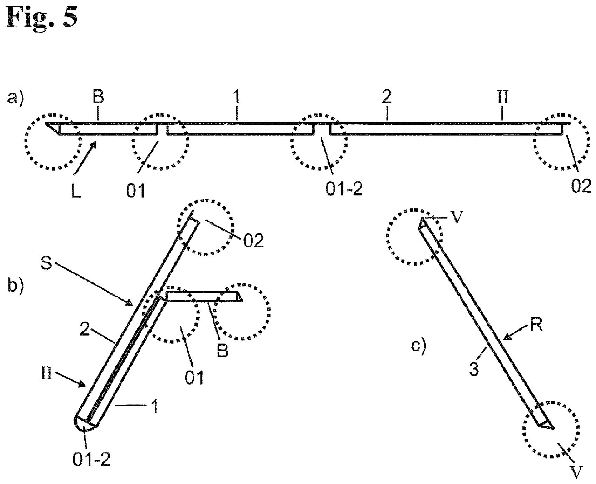

Figur 5 zeigt ein Verfahren zur Herstellung eines in Figur 4 dargestellten Thermosiphonkollektors. Ausgegangen wird dabei von einer in Figur 5a dargestellten doppelwandig extrudierten Platte, in die an den Stellen O1, O1-2 und O2 auf einer Seite L Öffnungen, beispielsweise durch Einfräsen eingebracht werden. Dabei ist die Distanz von der Öffnung O1 bis zur Öffnung O1-2 kleiner als die Distanz von der Öffnung O1-2 zur Öffnung O2. Figur 5b zeigt die erste doppelwandige extrudierte Platte nach ihrer Umformung. Dabei wird der Bereich zwischen den Öffnungen O1 und O1-2 um die Öffnung O1-2 auf den Bereich zwischen den Öffnungen O1-2 und O2 gefaltet, d.h. um 180° abgewinkelt. Der Bereich zwischen den Öffnungen O1-2 und O2 stellt somit den Bereich dar, in dem der zweite Kanal oder die zweiten Kanäle 2 ausgebildet sind (aufströmende Kanäle), der Bereich zwischen den Öffnungen O1-2 und O1 den Bereich, in dem der erste Kanal oder die ersten Kanäle 1 ausgebildet sind, während der Bereich zwischen der Öffnung O1 und dem (linken) Ende der Platte den Boden B des Flüssigkeitsreservoirs I bildet. In Figur 5c dargestellt ist eine zweite doppelwandige extrudierte Platte 3, die die Rückseite R des Thermosiphonkollektors bildet. Die zweite Platte 3 kann dabei an ihren Enden mit Verschlüssen V verschlossen werden. Durch Verbinden der umgeformten ersten doppelwandigen Platte wie in Figur 5b dargestellt und der zweiten doppelwandigen Platte 3 wie in Figur 5c dargestellt, kann ein Thermosiphonkollektor wie in Figur 4 beschrieben, dargestellt werden. Wie bereits in Figur 4 beschrieben, müssen zum Verschließen des Flüssigkeitsreservoirs I noch Seitenwände angebracht werden (nicht dargestellt). Zusätzlich können gegebenenfalls noch Abfluss- oder Zulaufmöglichkeiten bzw. Wärmetauscher eingebracht werden (nicht dargestellt).

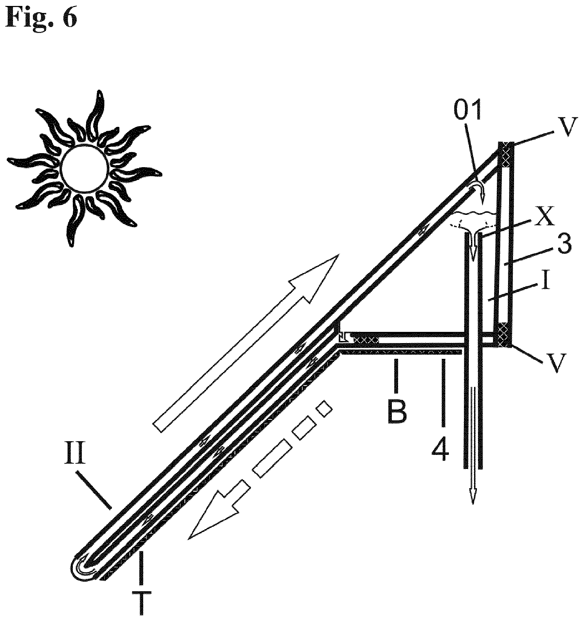

Figur 6 stellt einen weiteren Thermosiphonkollektor dar, der aus drei doppelwandigen extrudierten Platten gebildet ist. Der Thermosiphonkollektor gemäß Figur 6 ist dabei prinzipiell dem Thermosiphonkollektor gemäß Figur 4 sehr ähnlich. Aus Gründen der Übersichtlichkeit sind dabei die gleichen Bezugszeichen wie in Figur 4 nicht erneut aufgeführt, allerdings ist der Boden B aus einer separaten, dritten doppelwandigen extrudierten Platte 4 gebildet, die über die komplette Rückseite des Solarabsorbers II geführt ist und somit eine thermische Isolierung T auf der Rückseite des Solarabsorbers ausbildet. Ebenso ist eine Überlaufmöglichkeit X dargestellt, mit der der Flüssigkeitsregel im Flüssigkeitsreservoir I reguliert werden kann. Die Rückwand R bzw. die ersten Kanäle 1 und zweiten Kanäle 2 sind wie in Figur 4 dargestellt und lassen sich auf analoge Art und Weise wie in Figur 5 darstellen.

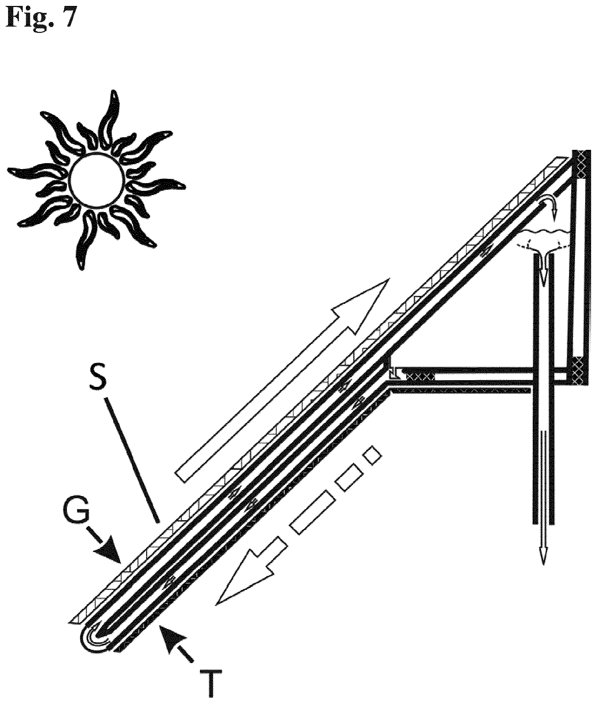

Figur 7 beschreibt einen weiteren Thermosiphonkollektor, der auf identische Art und Weise wie in Figur 6 gebildet ist. Zusätzlich verfügt der in Figur 7 dargestellte Thermosiphonkollektor dabei über eine vollflächige Verglasung G der der Sonne zugewandten Seite S, die sich über das Flüssigkeitsreservoir I und den Solarabsorber II erstreckt.

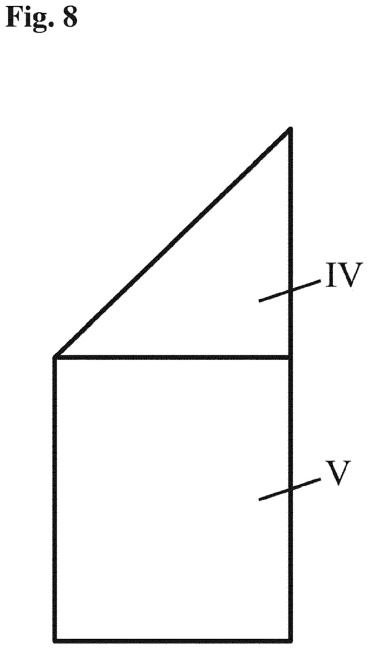

Figur 8 zeigt bevorzugte Seitenwände, mit denen das Flüssigkeitsreservoir I eines Thermosiphonkollektors, wie z.B. in den Figuren 4, 6 und 7 dargestellt, an den Seiten verschlossen werden kann. Die Seitenwand weist bevorzugt eine Abdeckung IV auf, mit der das Flüssigkeitsreservoir I verschlossen werden kann. Zusätzlich kann das Seitenstück bis zum Boden durchgehend V durchgeführt sein, so dass für den Fall, dass entsprechende Seitenwände auf beiden Seiten des Flüssigkeitsreservoirs I angebracht sind, die Seitenwände gleichzeitig als Standbeine fungieren. Die in Figur 8 dargestellten Seitenwände können ebenso aus doppelwandigen extrudierten Platten gebildet sein.

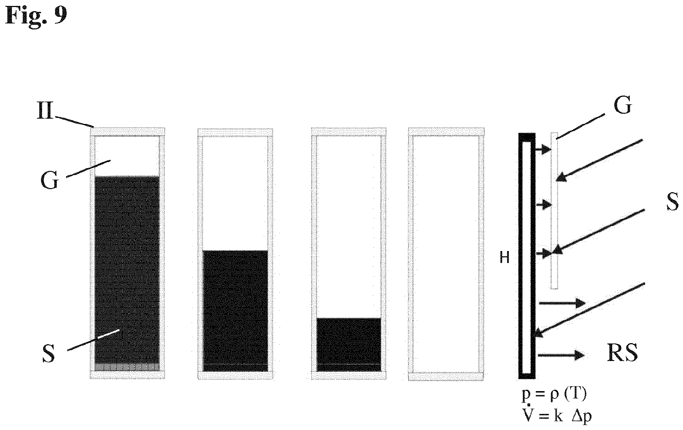

In Figur 9 sind verschiedene Möglichkeiten zur Verglasung G der der Sonne zugewandten Seite des Solarabsorbers S dargestellt. In Figur 9 links dargestellt ist eine Verglasung G, die beispielsweise ca. 1/5 der Fläche des Solarabsorbers II ausmacht, in den weiteren drei Figuren sind sukzessive größere Verdeckungen bzw. Verglasung G des Solarabsorbers dargestellt. In Figur 9 rechts dargestellt ist das Funktionsprinzip der Verglasung G, es wird verhindert, dass dabei thermische Energie durch Abstrahlung R_{S} verloren geht.

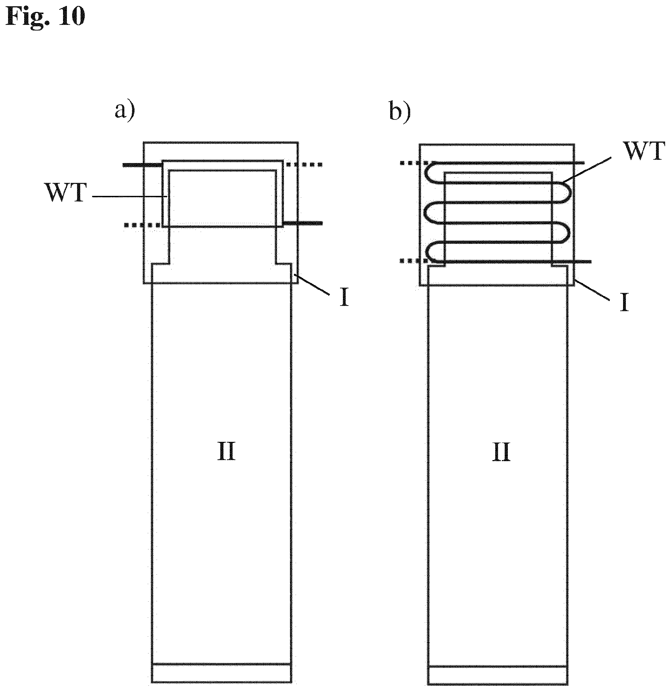

Figur 10 zeigt die Möglichkeit des Einbringens eines Wärmetausches WT in das Flüssigkeitsreservoir I des Thermosiphonreservoirs gemäß der vorliegenden Erfindung. Figur 10a zeigt dabei einen Wärmetauscher WT, der als Tank ausgebildet ist, der innerhalb des Flüssigkeitsreservoirs I eingebracht ist, während Figur 10b einen Wärmetauscher WT zeigt, der einen direkten Wärmeaustausch ermöglicht.

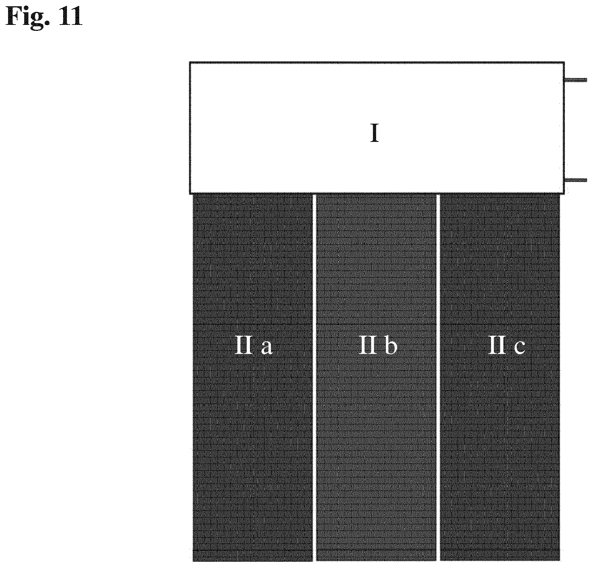

Figur 11 zeigt einen modularen Aufbau eines Thermosiphonkollektors gemäß der Erfindung, bei dem mehrerer Solarabsorber IIa, IIb und IIc mit einem einzigen Flüssigkeitsreservoir I verschaltet sind.

Die Forschungsarbeiten, die zu diesen Ergebnissen geführt haben, wurden von der Europäischen Union gefördert.

## Patentansprüche

1. Thermosiphonkollektor, umfassend zumindest ein Flüssigkeitsreservoir (l) für einen flüssigen Wärmeträger sowie zumindest einen Solarabsorber (II), wobei zumindest der Solarabsorber (II) aus einer doppelwandigen extrudierten Platte mit mindestens zwei Kanälen (1, 2) gebildet ist, wobei mindestens ein erster Kanal (1) mit einem unteren Bereich (la) des Flüssigkeitsreservoirs (l) in fluidischer Verbindung und mindestens ein zweiter Kanal (2) mit einem oberen Bereich (lb) des Flüssigkeitsreservoirs (l) in fluidischer Verbindung steht und jeweils mindestens ein erster Kanal (1) mit mindestens einem zweiten Kanal (2) am vom Flüssigkeitsreservoir abgewandten Ende (E) des Solarabsorbers (II) in fluidischer Verbindung (1-2) steht, wobei sämtliche Kanäle (1, 2) in einer Ebene nebeneinander liegend ausgebildet sind, **dadurch gekennzeichnet, dass** die erste Sorte von Kanälen (1) außen am Solarabsorber (II) angeordnet und die zweite Sorte von Kanälen (2) innen angeordnet ist, sodass die zweite Sorte von Kanälen (2) von den ersten Kanälen (1) eingeschlossen ist.

2. Thermosiphonkollektor nach Anspruch 1, **dadurch gekennzeichnet, dass** die Anzahl der ersten Kanäle (1) des Solarabsorbers (II) kleiner der Anzahl der zweiten Kanäle (2) des Solarabsorbers (II) ist.

3. Thermosiphonkollektor nach einem der vorhergehenden Ansprüche, **dadurch gekennzeichnet, dass** auf der der Sonnenstrahlung abgewandten Seite des Solarabsorbers (II) zumindest bereichsweise oder vollflächig eine thermische Isolierung (T) aufgebracht ist, wobei die Isolierung bevorzugt als weitere doppelwandige extrudierte Platte ausgebildet ist.

4. Thermosiphonkollektor nach einem der vorhergehenden Ansprüche, **dadurch gekennzeichnet, dass** die Wandungsstärke der doppelwandigen extrudierten Platte von 0,5 bis 2 mm, bevorzugt von 0,8 bis 1 mm beträgt.

5. Thermosiphonkollektor nach einem der vorhergehenden Ansprüche, **dadurch gekennzeichnet, dass** der Solarabsorber (II) und das Flüssigkeitsreservoir (l) einstückig aus einer doppelwandigen extrudierten Platte gebildet sind, wobei die fluidische Kommunikation des mindestens einen ersten (1) bzw. des mindestens einen zweiten Kanals (2) mit dem Flüssigkeitsreservoir (l) durch mindestens eine Öffnung (O1, O2) in der inneren Wandung der doppelwandig extrudierten Platte ermöglicht ist.

6. Thermosiphonkollektor nach einem der vorhergehenden Ansprüche, **dadurch gekennzeichnet, dass** im oberen Bereich (lb) des Flüssigkeitsreservoirs (l) mindestens eine Entnahmemöglichkeit (X) für den flüssigen Wärmeträger und/oder ein Wärmetauscher (WT) eingebracht ist und/oder im unteren Bereich (la) des Flüssigkeitsreservoirs (l) eine Zufuhrmöglichkeit für flüssigen Wärmeträger eingebracht ist.

7. Verfahren zur Herstellung eines Thermosiphonkollektors nach einem der vorhergehenden Ansprüche, bei dem zumindest ein Solarabsorber (II) aus einer doppelwandigen extrudierten Platte mit
a) mindestens zwei Kanälen bereitgestellt wird, wobei jeweils mindestens ein erster Kanal (1) mit mindestens einem zweiten Kanal (2) im vom Flüssigkeitsreservoir abgewandten Ende des Solarabsorbers (E) in fluidische Verbindung gebracht (1-2) wird, oder
b) mindestens einem Kanal bereitgestellt wird, wobei jeweils mindestens ein erster Kanal (1) und mindestens ein zweiter Kanal (2) durch Umformen der doppelwandigen extrudierten Platte erzeugt wird, und jeweils mindestens ein erster Kanal mit mindestens einem zweiten Kanal im vom Flüssigkeitsreservoir (l) abgewandten Ende (E) des Solarabsorbers (II) in fluidische Verbindung (1-2) gebracht wird,
und mindestens ein erster Kanal (1) mit einem unteren Bereich eines Flüssigkeitsreservoirs (la) in fluidische Verbindung und mindestens ein zweiter Kanal (2) mit einem oberen Bereich des Flüssigkeitsreservoirs (lb) in fluidische Verbindung gebracht wird.

8. Verfahren nach vorhergehendem Anspruch, **dadurch gekennzeichnet, dass** eine doppelwandige extrudierte Platte mit mindestens zwei Kanälen (1, 2)
a) zumindest auf einer Stirnseite (E) verschlossen wird, so dass eine fluidische Kommunikation (1-2) zwischen den mindestens zwei Kanälen (1, 2) möglich ist,
b) auf einer Längsseite (L) zumindest eine Öffnung (O1, O2)pro Kanal in die Wandung der doppelwandigen extrudierten Platte eingebracht wird, wobei die mindestens eine Öffnung (O1) für den mindestens einen ersten Kanal (1), verglichen mit der mindestens einen Öffnung (O2) für den mindestens einen zweiten Kanal (2) auf der Längsseite (L) der doppelwandigen extrudierten Platte weiter in Richtung des auf der Stirnseite angebrachten Verschlusses (E) angeordnet ist, wobei sämtliche Öffnungen (O1, O2) so angebracht werden, dass ein Überstand (U) resultiert, und
c) der Überstand (U) umgeformt wird, um die der verschlossenen Stirnseite (E) gegenüberliegende Stirnseite (E') mit der Längsseite (L) der doppelwandigen extrudierten Platte, in die die Öffnungen (O1, O2) eingebracht sind bzw. werden in Berührung zu bringen und anschließend zu verbinden,
wobei die Schritte a), b) und c) in beliebiger Reihenfolge ausgeführt werden können.

## Claims

1. Thermosiphon collector, comprising at least one fluid reservoir (l) for a fluid heat transfer medium, and also at least one solar absorber (II), wherein at least the solar absorber (II) is formed from a double-walled extruded plate with at least two channels (1, 2), wherein at least one first channel (1) is in fluidic connection to a lower region (la) of the fluid reservoir (l), and at least one second channel (2) is in fluidic connection to an upper region (Ib) of the fluid reservoir (l), and respectively at least one first channel (1) is in fluidic connection (1-2) to at least one second channel (2) at the end (E) of the solar absorber (II) facing away from the fluid reservoir, wherein all the channels (1, 2) are configured situated side by side in one plane,
**characterized in that** the first type of channels (1) are hereby disposed outwards at the solar absorber (II) and the second type of channels (2) are disposed inwards, so that the second type of channels (2) is enclosed by the first type of channels (1).

2. Thermosiphon collector according to claim 1, **characterised in that** the number of first channels (1) of the solar absorber (II) is less than to the number of second channels (2) of the solar absorber (II).

3. Thermosiphon collector according to one of the preceding claims, **characterised in that** a thermal insulation (T) is at least partially or fully applied on the side of the solar absorber (II) facing away from the solar radiation, the insulation being preferably configured as additional double-walled extruded plate.

4. Thermosiphon collector according to one of the preceding claims, **characterised in that** the wall thickness of the double-walled extruded plate is from 0.5 to 2 mm, preferably from 0.8 to 1 mm.

5. Thermosiphon collector according to one of the preceding claims, **characterised in that** the solar absorber (II) and the fluid reservoir (l) are integrally formed from a double-walled extruded plate, wherein the fluidic communication of the at least one first (1) or of the at least one second channel (2) with the fluid reservoir (l) is made possible by at least one opening (O1, O2) in the inner wall of the double-walled extruded plate.

6. Thermosiphon collector according to one of the preceding claims, **characterised in that**, in the upper region (lb) of the fluid reservoir (l), at least one withdrawal possibility (X) for the fluid heat transfer medium and/or a heat exchanger (WT) is introduced and/or, in the lower region (la) of the fluid reservoir (l), a supply possibility for fluid heat transfer medium is introduced.

7. Method for producing a thermosiphon collector according to one of the preceding claims, in which at least one solar absorber (II) made of a double-walled extruded plate with
a) at least two channels (1) is provided, wherein respectively at least one first channel (1) is brought into fluidic connection (1-2) to at least one second channel (2) in the end of the solar absorber (E) facing away from the fluid reservoir, or
b) at least one channel is provided, wherein respectively at least one first channel (1) and at least one second channel (2) are produced by reshaping the double-walled extruded plate, and respectively at least one first channel is brought into fluidic connection to at least one second channel in the end (E) of the solar absorber (II) facing away from the fluid reservoir (l),
and at least one first channel (1) is brought into fluidic connection to a lower region of a fluid reservoir (la) and at least one second channel (2) is brought into fluidic connection to an upper region of the fluid reservoir (lb).

8. Method according to the preceding claim, **characterised in that** a double-walled extruded plate with at least two channels (1, 2),
a) is closed on one end-side (E), so that a fluidic communication (1-2) between the at least two channels (1, 2) is possible,
b) on a long side (L), at least one opening (O1, O2) per channel is introduced into the wall of the double-walled extruded plate, wherein the at least one opening (O1) for the at least one first channel (1) is disposed further in the direction of the closure (E) introduced on the end-side, compared to the at least one opening (O2) for the at least one second channel (2) on the long side (L) of the double-walled extruded plate, wherein all the openings (O1, O2) are introduced in such way that an excess length (U) results, and
c) the excess length (U) is reshaped in order to bring in contact and then to connect the end-side (E') situated opposite the closed end-side (E) with the long side (L) of the double-walled extruded plate, in which the openings (O1, O2) are introduced.
wherein steps a), b) and c) can be performed in any sequence.

## Revendications

1. Collecteur à thermosiphon comprenant au moins un réservoir de liquide (l) pour un agent caloporteur fluide ainsi qu'au moins un absorbeur solaire (II), au moins l'absorbeur solaire (II) étant constitué d'une plaque extrudée à double paroi avec au moins deux canaux (1, 2), au moins un premier canal (1) étant relié de manière fluidique avec une partie inférieure (la) du réservoir de liquide (l) et au moins un deuxième canal (2) étant relié de manière fluidique avec une partie supérieure (lb) du réservoir de liquide (l) et au moins un premier canal (1) et étant relié de manière fluidique (1-2) avec au moins un deuxième canal (2) au niveau de l'extrémité (E) de l'absorbeur solaire (II) opposée au réservoir de liquide, tous les canaux (1, 2) étant juxtaposés dans un plan,
**caractérisé en ce que**
le premier type de canaux (1) est disposé à l'extérieur sur l'absorbeur solaire (II) et le deuxième type de canaux (2) est disposé à l'intérieur, de façon à ce que le deuxième type de canaux (2) soit entouré par les premiers canaux (1).

2. Collecteur à thermosiphon selon la revendication 1, **caractérisé en ce que** le nombre de premiers canaux (1) de l'absorbeur solaire (II) est inférieur au nombre des deuxièmes canaux (2) de l'absorbeur solaire (II).

3. Collecteur à thermosiphon selon l'une des revendications précédentes, **caractérisé en ce que**, sur le côté, opposé au rayonnement solaire, de l'absorbeur solaire (II), au moins à certains endroits ou sur toute la surface, une isolation thermique (T) est appliquée, l'isolation étant conçue de préférence comme une plaque extrudée à double paroi supplémentaire.

4. Collecteur à thermosiphon selon l'une des revendications précédentes, **caractérisé en ce que** l'épaisseur des parois de la plaque extrudée à double paroi est de 0,5 à 2 mm, de préférence de 0,8 à 1 mm.

5. Collecteur à thermosiphon selon l'une des revendications précédentes, **caractérisé en ce que** l'absorbeur solaire (II) et le réservoir de liquide (l) sont formés d'une seule pièce à partir de la plaque extrudée à double paroi, la communication fluidique de l'au moins un premier (1) ou de l'au moins un deuxième canal (2) avec le réservoir de liquide (I) étant établie à l'aide d'au moins une ouverture (O1, O2) dans la paroi interne de la plaque extrudée à double paroi.

6. Collecteur à thermosiphon selon l'une des revendications précédentes, **caractérisé en ce que**, dans la partie supérieure (lb) du réservoir de liquide (l), au moins une possibilité de prélèvement (X) pour l'agent caloporteur fluide et/ou un échangeur thermique (WT) est inséré et/ou dans la partie inférieure (la) du réservoir de liquide (l), une possibilité d'introduction d'un agent caloporteur fluide est insérée.

7. Procédé de fabrication d'un collecteur à thermosiphon selon l'une des revendications précédentes, dans lequel au moins un absorbeur solaire (II) est réalisé à partir d'une plaque extrudée à double paroi avec
a) au moins deux canaux, au moins un premier canal (1) étant mis en liaison fluidique (1-2) avec au moins un deuxième canal (2) au niveau de l'extrémité de l'absorbeur solaire (E) opposée au réservoir de liquide ou
b) au moins un canal, au moins un premier canal (1) et au moins un deuxième canal (2) étant réalisé par formage de la plaque extrudée à double paroi et au moins un premier canal étant mis en liaison fluidique (1-2) avec au moins un deuxième canal (2) au niveau de l'extrémité (E) de l'absorbeur solaire (II) opposée au réservoir de liquide (l),
et au moins un premier canal (1) est mis en liaison fluidique avec une partie inférieure d'un réservoir de liquide (la) et au moins un deuxième canal (2) est mis en liaison fluidique avec une partie supérieure du réservoir de liquide (lb).

8. Procédé selon la revendication précédente, **caractérisé en ce qu'**une plaque extrudée à double paroi avec au moins deux canaux (1, 2)
a) est fermée au moins sur une face frontale (E), de façon à ce qu'une communication fluidique (1-2) entre les au moins deux canaux (1, 2) soit possible,
b) sur un côté longitudinal (L), au moins une ouverture (O1, O2) par canal est réalisée dans la paroi de la plaque extrudée à double paroi, l'au moins une ouverture (O1) pour l'au moins un premier canal (1) étant disposée plus loin en direction de la fermeture (E) montée sur la face frontale par rapport à l'au moins une ouverture (O2) pour l'au moins un deuxième canal (2) sur le côté longitudinal (L) de la plaque extrudée à double paroi, toutes les ouvertures (O1, O2) étant disposées de façon à obtenir un surplomb (U) et
c) le surplomb (U) est formé afin de mettre en contact la face frontale (E') opposée à la face frontale fermée (E) avec le côté longitudinal (L) de la plaque extrudée à double paroi, dans lequel sont réalisées les ouvertures (O1, O2), puis de les raccorder,
les étapes a), b) et c) pouvant être exécutées dans un ordre quelconque.
